# EUROPÄISCHE PATENTSCHRIFT

(11) **EP 3 562 744 B1**
(45) Veröffentlichungstag und Bekanntmachung des Hinweises auf die Patenterteilung: **30.11.2022**
(21) Anmeldenummer: 17788242.0
(22) Anmeldetag: 25.10.2017
(51) Int. Cl.: B65B 1/36, G01F 11/24

(54) **VORRICHTUNG ZUM DOSIEREN UND ABFÜLLEN VON PULVERFÖRMIGEM FÜLLGUT IN BEHÄLTER**
DEVICE FOR DOSING AND FILLING POWDERY FILLING MATERIAL INTO CONTAINERS
DISPOSITIF POUR DOSER ET TRANSVASER UN PRODUIT PULVÉRULENT DANS DES RÉCIPIENTS

(30) Priorität: 27.12.2016 DE 102016226218
(43) Veröffentlichungstag der Anmeldung: 06.11.2019
(73) Patentinhaber: Syntegon Technology GmbH, 71332 Waiblingen (DE)
(72) Erfinder: ABEL, Thomas, 74538 Rosengarten (DE)
(74) Vertreter: DREISS Patentanwälte PartG mbB
(86) Internationale Anmeldenummer: PCT/EP2017/077310
(87) Internationale Veröffentlichungsnummer: WO 2018/121900

(56) Entgegenhaltungen:
- EP-A1- 0 319 131
- DE-A1- 4 140 305
- DE-A1- 19 915 259

## Beschreibung

### Stand der Technik

Die Erfindung betrifft eine Vorrichtung zum Dosieren und Abfüllen von pulverförmigem Füllgut in Behälter nach dem Oberbegriff des Anspruchs 1.

Eine Vorrichtung mit den Merkmalen des Oberbegriffs des Anspruchs 1 ist aus der DE 10 2008 040 595 A1 der Anmelderin bekannt. Die bekannte Vorrichtung weist ein in einer horizontalen Achse drehbar gelagertes Dosierrad als Dosiereinrichtung auf, wobei in dem Dosierrad mehrere Dosierkammern zum Abfüllen jeweils einer bestimmten Füllgutmenge ausgebildet sind. Die Dosierkammern gelangen bei der schrittweisen Drehung des Dosierrads in Überdeckung mit einem Füllgutbehälter, aus dem das pulver- bzw. rieselförmige Füllgut in die Dosierkammer abgegeben wird. Die Abgabe des Füllguts aus dem Füllgutbehälter in die jeweilige Dosierkammer wird durch Unterdruck unterstützt, der über eine Bohrung an der Dosierkammer anliegt. Nach einer Drehung des Dosierrads um 180° gegenüber dem Füllgutbehälter erfolgt die Abgabe des Füllguts aus der Dosierkammer in einen unterhalb der Dosierkammer angeordneten Behälter durch Schwerkraft. Die Abgabe des Füllguts wird sowohl durch einen Schwingungserzeuger, als auch durch eine Druckluftquelle unterstützt, wobei die Druckluftquelle über die gleiche Bohrung auf die Dosierkammer wirkt wie die Unterdruckquelle während des Füllvorgangs.

Die aus der genannten Schrift bekannte Vorrichtung ist zum Abfüllen von Füllgut in Behälter unter aseptischen Bedingungen nur bedingt geeignet. Dies rührt daher, dass die Dosierkammern, die in Bezug zur Drehachse am Dosierrad radial nach außen ragen und mit dem Außenumfang des Dosierrads abschließen, gegenüber der Umgebung nicht isoliert bzw. abgeschlossen sind, so dass ein Zutritt von Partikeln oder Medien in den Bereich der Dosierkammern bei der Drehung des Dosierrades nicht ausgeschlossen werden kann. Insbesondere ist auch der stirnseitige Bereich zwischen dem Dosierrad und dem Vorratsbehälter nicht mediendicht gestaltet. Weiterhin ist die Reinigung der Bauteile der Vorrichtung, um diese für die Produktion vorzubereiten, wobei unter Reinigung eine Sterilisation von produktführenden Teilen gemeint ist, relativ aufwändig.

### Offenbarung der Erfindung

Die Vorrichtung zum Dosieren und Abfüllen von pulverförmigem Füllgut in Behälter mit den Merkmalen des Anspruchs 1 hat den Vorteil, dass sie hinsichtlich eines aseptischen Abfüllbetriebs optimiert ist. Insbesondere wird der Zutritt von Medien oder Partikeln aus einem Lagerbereich der Dosiereinrichtung zu dem produktführenden Bereich vermieden. Hierzu ist es erfindungsgemäß vorgesehen, dass die Dosiereinrichtung mittels einer innerhalb des Vorratsbehälters angeordneten Lagereinrichtung drehbar gelagert ist, und dass zwischen der Lagereinrichtung und der wenigstens einen Dosierkammer eine Dichteinrichtung angeordnet ist, die dazu ausgebildet ist, den Zutritt von Medien oder Partikeln aus dem Bereich der Lagereinrichtung in den Bereich der Dosierkammer abzudichten.

Vorteilhafte Weiterbildungen der erfindungsgemäßen Vorrichtung zum Dosieren und Abfüllen von pulverförmigem Füllgut in Behälter sind in den Unteransprüchen aufgeführt.

Die Verwendung eines eine erste Antriebsachse der Dosiereinrichtung radial umgebenden Wellendichtrings als Dichteinrichtung hat den Vorteil, dass ein an sich handelsübliches Dichtelement (Wellendichtring) verwendet werden kann, das die geforderten Dichtheitsanforderungen und sonstige Randbedingungen mit relativ geringen Kosten erfüllt.

Eine besonders bevorzugte Anordnung der Dichteinrichtung bzw. des Wellendichtrings und der Lagereinrichtung sieht vor, dass diese radial zwischen der ersten Antriebsachse der Dosiereinrichtung und einer Aufnahme im Vorratsbehälter für das Füllgut aufgenommen sind. Dies ermöglicht es, die Lagereinrichtung ebenfalls in dem radialen Bereich zwischen der ersten Antriebsachse und dem Vorratsbehälter anzuordnen, wobei es beispielsweise möglich ist, die Lagereinrichtung in unmittelbarer Nähe der Dichteinrichtung zu positionieren. Eine derartige Anordnung der Dichteinrichtung und der Lagereinrichtung hat zur Folge, dass der produktführende Bereich besonders einfach und sicher von der potentiell Partikel bzw. Medien in den produktführenden Bereich einschleppenden Lagereinrichtung getrennt werden kann.

Ganz besonders bevorzugt ist es, wenn die Lagereinrichtung zusammen mit der Dichteinrichtung und der Dosiereinrichtung als eine mit dem Vorratsbehälter verbindbare Baueinheit ausgebildet ist. Eine derartige konstruktive Kombination der genannten Elemente zu einer Baueinheit hat den Vorteil, dass die Baueinheit vor der Inbetriebnahme der Vorrichtung beispielsweise besonders einfach bzw. als Ganzes sterilisiert werden kann und anschließend mit dem Vorratsbehälter verbunden wird. Dadurch ist eine nachträgliche Sterilisation der die Baueinheit ausbildenden Elemente nicht mehr erforderlich.

Um die Anforderungen hinsichtlich des aseptischen Füllbetriebs erfüllen zu können, ist es darüber hinaus vorgesehen, dass die Lagereinrichtung und die Dichteinrichtung aus sterilisierbaren Materialien bestehen. Unter sterilisierbaren Materialien werden insbesondere solche Materialien verstanden, die bei den relativ hohen Temperaturen der Sterilisiermedien (beispielsweise Heißluft und/oder Wasserstoffperoxid) eine genügend hohe Widerstandsfähigkeit besitzen.

In Weiterbildung der aus der Lagereinrichtung, der Dichteinrichtung und der Dosiereinrichtung bestehenden Baueinheit ist es vorgesehen, dass die Baueinheit mit einem Ausblaselement zusammenwirkt, in dem die wenigstens eine Bohrung für die Druckluft mündet, wobei das Ausblaselement in eine in einem Bodenbereich des Vorratsbehälters ausgebildete Öffnung formschlüssig einsetzbar ist.

Um eine besonders hohe Leistung der Vorrichtung zu ermöglichen, bei der nichtsdestotrotz die Vorrichtung vor Produktionsbeginn besonders einfach gereinigt bzw. sterilisiert werden kann, ist es vorgesehen, dass mehrere Baueinheiten mit einem gemeinsamen Vorratsbehälter verbunden sind.

Weitere Vorteile, Merkmale und Einzelheiten der Erfindung ergeben sich aus der nachfolgenden Beschreibung bevorzugter Ausführungsbeispiele sowie anhand der Zeichnung.

Diese zeigt in:
- Fig. 1: eine perspektivische Darstellung einer Vorrichtung zum Dosieren und Abfüllen von pulverförmigem Füllgut in Behälter,
- Fig. 2: einen Ausschnitt aus der Vorrichtung gemäß Fig. 1 in einem perspektivischen Längsschnitt im Bereich einer Dosiereinrichtung,
- Fig. 3: eine perspektivische Unteransicht eines Ausblaselements, wie es die Dosiereinrichtung gemäß der Fig. 2 aufweist und
- Fig. 4: eine perspektivische, teilweise geschnittene Darstellung im Bereich der Luftversorgung des Ausblaselements gemäß Fig. 3 im Einbauzustand in der Dosiereinrichtung.

Gleiche Elemente bzw. Elemente mit gleicher Funktion sind in den Figuren mit den gleichen Bezugsziffern versehen.

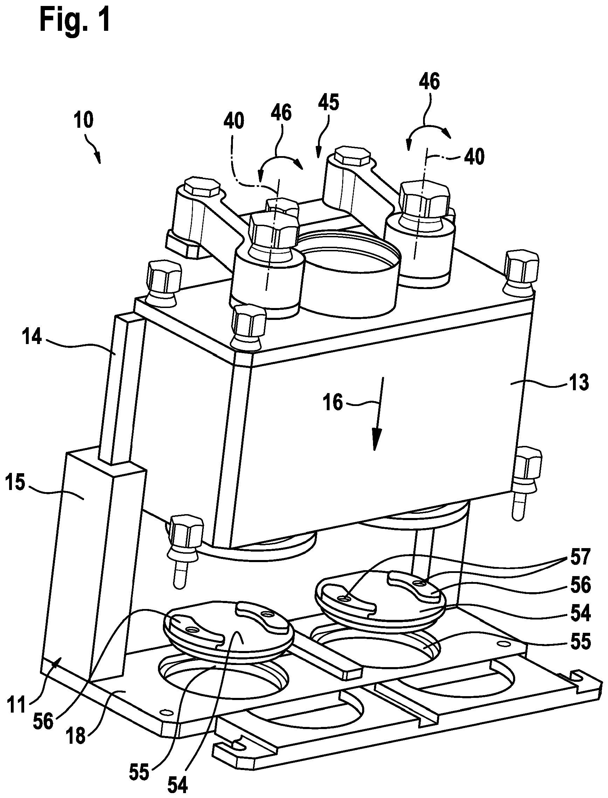

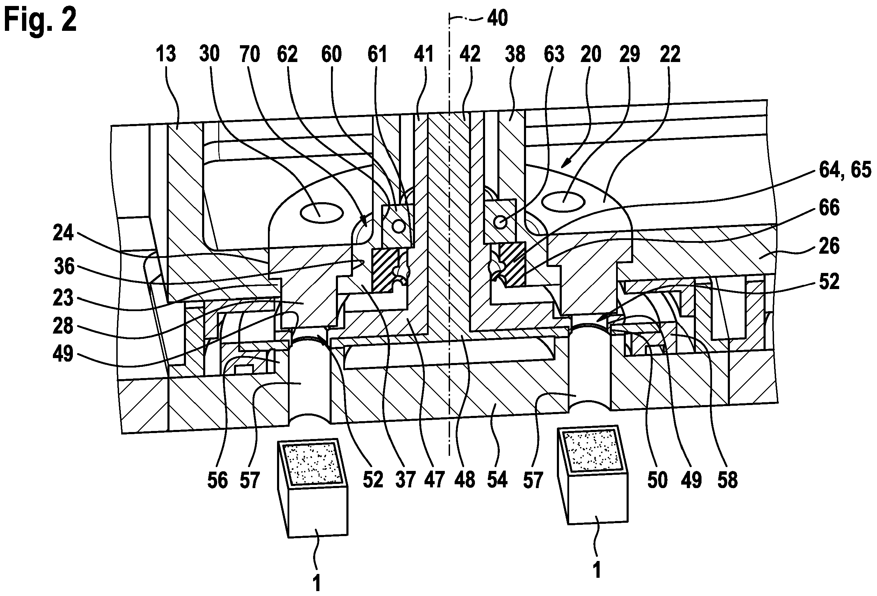

Die in der Fig. 1 bereichsweise dargestellte Vorrichtung 10 dient zum Dosieren und Abfüllen von pulverförmigem Füllgut in Behälter 1. Bei dem Füllgut handelt es sich insbesondere, und nicht einschränkend, um ein Pharmazeutikum in Form von rieselförmigen Pellets, welches mittels der Vorrichtung 10 unter aseptischen Bedingungen in beispielsweise in Form von Vials, Fläschchen oder Ähnlichem ausgebildete Behälter 1 (Fig. 2) abgegeben wird.

Die Vorrichtung 10 weist ein Trägergestell 11 auf, an dem ein geschlossener Vorratsbehälter 13 für das Füllgut befestigt ist. Der Vorratsbehälter 13 kann über Führungsschienen 14 sowie an dem Trägergestell 11 angeordnete Führungen 15 aus der in der Fig. 1 dargestellten Position in Richtung des Pfeils 16 in Richtung einer unteren Abschlussplatte 18 bewegt werden. Die in der Fig. 1 dargestellte Position, bei der der Vorratsbehälter 13 von der Abschlussplatte 18 beabstandet angeordnet ist, dient der Montage bzw. Demontage von Bauteilen der Vorrichtung 10.

Innerhalb des Vorratsbehälters 13, der in der Fig. 2 ausschnittsweise gezeigt ist, sind beispielhaft zwei identisch ausgebildete Dosiereinrichtungen 20 angeordnet. Jeder der Dosiereinrichtungen 20 ist ein in den Fig. 2 bis 4 erkennbares Ausblaselement 22 zugeordnet. Das Ausblaselement 22 ist in jeweils einer eine Stufe 23 aufweisenden Aussparung 24 in einem Bodenbereich 26 des Vorratsbehälters 13 formschlüssig eingesetzt.

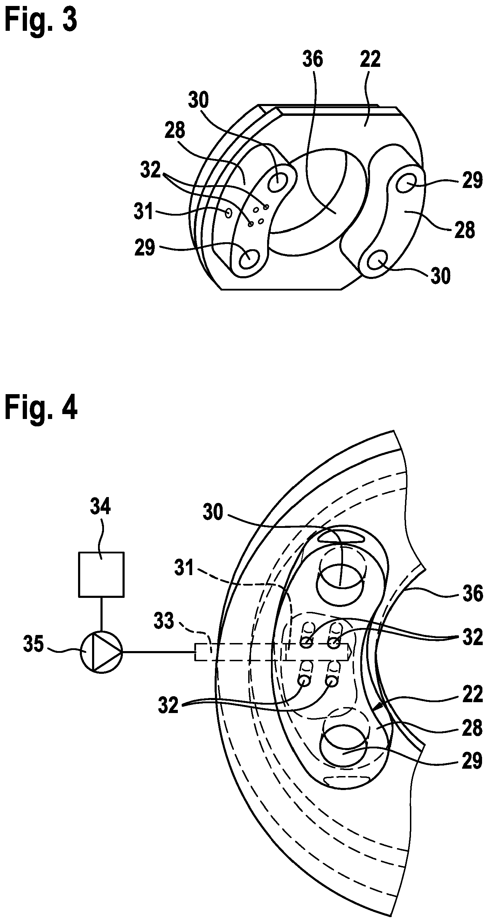

Wie besonders anhand der Fig. 3 erkennbar ist, weist das in etwa ringförmig ausgebildete Ausblaselement 22 auf der dem Vorratsbehälter 13 abgewandten Seite zwei, auf einem gemeinsamen Teilkreisdurchmesser angeordnete, nierenförmige Fortsätze 28 auf, in denen jeweils zwei Durchgangsbohrungen 29, 30 ausgebildet sind, die der Durchleitung von Füllgut aus dem Vorratsbehälter 13 in den Bereich der Dosiereinrichtung 20 dienen. In einem Bereich zwischen den beiden Durchgangsbohrungen 29, 30 jedes Fortsatzes 28 ist darüber hinaus eine senkrecht zu den Längsachsen der Durchgangsbohrungen 29, 30 verlaufende Sammelbohrung 31 (Fig. 4) ausgebildet, die der Zuführung von Druckluft zu vier, achsparallel zu den Durchgangsbohrungen 29, 30 angeordneten Druckluftbohrungen 32 dient. Die Sammelbohrung 31 ist mit einer in der Fig. 4 erkennbaren Versorgungsbohrung 33 verbunden, die wiederum mit einer von einer Steuereinrichtung 34 ansteuerbaren Überdruckquelle 35 verbunden ist. Das Ausblaselement 22 weist darüber hinaus eine, einen runden Querschnitt aufweisende, zentrale Durchgangsöffnung 36 auf. Innerhalb der Durchgangsöffnung 36 ist im Einbauzustand des Ausblaselements 22 ein ringförmiger Abschnitt 37 des Vorratsbehälters 13 angeordnet, der sich in der vom Bodenbereich 26 abgewandten Seite in einen hülsenförmigen Abschnitt 38 fortsetzt. Der Abschnitt 38 dient der Aufnahme zweier, koaxial zu einer Drehachse 40 angeordneter Antriebsachsen 41, 42 der Dosiereinrichtung 20.

Die beiden in Richtung der Drehachse 40 axial zueinander verstellbaren Antriebsachsen 41, 42 der beiden Dosiereinrichtungen 20 sind mit einem in der Fig. 1 an der Oberseite des Vorratsbehälters 13 erkennbaren Hebelmechanismus 45 gekoppelt, der eine oszillierende Hin- und Herbewegung der beiden Antriebsachsen 41, 42 um die jeweilige Drehachse 40 um einen Drehwinkel von beispielsweise maximal 30° um eine Mittelstellung der Antriebsachsen 41, 42 in Richtung der Doppelpfeile 46 ermöglicht.

Die beiden Antriebsachsen 41, 42 sind jeweils mit einer etwa tellerförmigen Dosierscheibe 47, 48 verbunden, deren Ebenen parallel zueinander angeordnet sind. Die eine Dosierscheibe 47 ist unmittelbar unterhalb des Ausblaselements 22 angeordnet. Um einen Teilkreisdurchmesser um die Drehachse 40 weisen die beiden Dosierscheiben 47, 48 Durchgangsbohrungen 49, 50 auf, die eine Dosierkammer 52 begrenzen. Wesentlich dabei ist, dass in jeder der beiden Dosierscheiben 47, 48 jeweils vier, jeweils zueinander fluchtende Durchgangsbohrungen 49, 50 angeordnet sind, wobei die Durchgangsbohrungen 49, 50 im Bereich der Fortsätze 28 des Ausblaselements 22 angeordnet sind, und zwar in einem Abstand in Umfangsrichtung voneinander, der in Bezug zur Drehachse 40 halb so groß ist wie der Abstand der beiden Durchgangsbohrungen 29, 30 in dem Ausblaselement 22.

Auf der dem Ausblaselement 22 abgewandten Seite der beiden Dosierscheiben 47, 48 schließt sich jeweils ein in der Fig. 1 besonders deutlich erkennbares, scheibenförmiges (unteres) Abschlusselement 54 an, das in eine Aussparung 55 der Abschlussplatte 18 formschlüssig einsetzbar ist. Jede der beiden Abschlussplatten 54 weist zwei, in etwa nierenförmig ausgebildete, in Richtung zu der Dosierscheibe 48 ragende Fortsätze 56 mit jeweils einer Durchgangsbohrung 57 auf, die als Durchlassbohrung für das Füllgut aus dem Bereich der Dosierkammern 52 in die unterhalb der Abschlussplatte 18 bereitgestellten Behälter 1 dienen. Die beiden Fortsätze 56 sind radial von einem in der Fig. 2 erkennbaren Stützring 58 umgeben, der der Auflage der Dosierscheibe 48 dient.

Zum Dosieren bzw. Abgeben von Füllgut aus dem Vorratsbehälter 13 in die Behälter 1 werden die beiden Dosierscheiben 47, 48 der Dosiereinrichtung 20 abwechselnd in Überdeckung mit den Durchgangsbohrungen 29, 30 in dem Ausblaselement 22 gebracht. Dadurch fällt Füllgut (durch Schwerkraft) durch die jeweilige Durchgangsbohrung 29, 30 in den Bereich der Dosierkammer 52, die von den Durchgangsbohrungen 49, 50 der beiden Dosierscheiben 47, 48 ausgebildet werden. Anschließend werden die beiden Dosierscheiben 47, 48 bzw. die Dosierkammern 52 in Überdeckung mit den Durchgangsbohrungen 57 gebracht, so dass das Füllgut aus den Dosierkammern 52 in die bereitgestellten Behälter 1 fällt. Der Füllvorgang des Füllguts aus den Dosierkammern 52 sowie insbesondere eine Reinigung der Wände der Dosierkammern 52 wird durch Druckluft unterstützt, die über die Druckluftbohrungen 32 achsparallel zu den Dosierkammern 52 zugeführt wird.

Die Antriebsachse 41 der Dosierscheibe 47 ist radial von einer Lagereinrichtung 60 umfasst. Die Lagereinrichtung 60 stützt sich an einem Bund 61 der Antriebsachse 41 axial ab und ist an ihrem Außenumfang radial in einer Ausnehmung 62 in Form einer Stufenbohrung im Bereich des hülsenförmigen Abschnitts 38 aufgenommen. Die Lagereinrichtung 60 weist beispielhaft aus Keramik bestehende Lagerkörper 63 auf.

Weiterhin schließt sich auf der der Dosierscheibe 47 zugewandten Seite axial unmittelbar an die Lagereinrichtung 60 eine Dichteinrichtung 64 in Form eines Wellendichtrings 65 an. Der Wellendichtring 65 ist radial in einer weiteren Ausnehmung 66 im Bereich des ringförmigen Abschnitts 37 des Vorratsbehälters 13 aufgenommen und schließt axial auf der der Lagereinrichtung 60 abgewandten Seite bündig mit der Unterseite des Bodenbereichs 26 des Vorratsbehälters 13 ab.

Die Dichteinrichtung 64 ist dazu ausgebildet, ggf. von der Lagereinrichtung 60 sich lösende Partikel bzw. Medien an einem Zutritt in Richtung zu den Dosierscheiben 47, 48 bzw. zu den Dosierkammern 52 zu hindern, um eine Kontamination des Füllguts zu vermeiden. Wesentlich ist weiterhin, dass die beiden mit den Antriebsachsen 41, 42 verbundenen Dosierscheiben 47, 48, zusammen mit der Lagereinrichtung 60 und der Dichteinrichtung 64, eine außerhalb der Vorrichtung 10 bzw. des Vorratsbehälters 13 montierbare Baueinheit 70 ausbilden, die von der Unterseite des Vorratsbehälters 13 her an der Vorrichtung 10 montierbar sind.

Um ein axiales Einführen der Antriebsachsen 41, 42 in den Vorratsbehälter 13 zu ermöglichen, dienen insbesondere die scheibenförmigen, aus der Abschlussplatte 18 demontierbaren Abschlussplatten 54. Die Baueinheit 70 ist derart ausgebildet, dass diese separat sterilisierbar ist, wozu die Bauteile entsprechend hitzebeständig bzw. geeignet ausgebildet sind. Weiterhin ist wesentlich, dass alle mit dem Füllgut im Bereich der Vorrichtung 10 in Kontakt tretenden Bauteile aus FDA-konformen Materialien bestehen. Die soweit beschriebene Vorrichtung 10 kann in vielfältiger Art und Weise abgewandelt bzw. modifiziert werden. Der Umfang des Gegenstands der Erfindung wird durch die folgenden Ansprüche bestimmt.

## Patentansprüche

1. Vorrichtung (10) zum Dosieren und Abfüllen von pulverförmigem Füllgut in Behälter (1), mit einem Vorratsbehälter (13) für das Füllgut, mit einer um eine Drehachse (40) schrittweise drehbaren Dosiereinrichtung (20), die wenigstens eine Dosierkammer (52) zur Aufnahme einer Sollmenge an Füllgut aufweist, wobei die Dosiereinrichtung (20) zumindest zwischen einer ersten Stellung zur Übernahme von Füllgut aus dem Vorratsbehälter (13) in die Dosierkammer (52) und einer zweiten Stellung zur Abgabe des Füllgut aus der Dosierkammer (52) in den Behälter (1) beweglich ist, und mit wenigstens einer Bohrung (31, 32, 33) zur Führung von Druckluft in den Bereich der Dosierkammer (52) in der zweiten Stellung,
**dadurch gekennzeichnet,**
**dass** die Dosiereinrichtung (20) mittels einer innerhalb des Vorratsbehälters (13) angeordneten Lagereinrichtung (60) drehbar gelagert ist, und dass zwischen der Lagereinrichtung (60) und der wenigstens einen Dosierkammer (52) eine Dichteinrichtung (64) angeordnet ist, die dazu ausgebildet ist, den Zutritt von Medien oder Partikeln aus dem Bereich der Lagereinrichtung (60) in den Bereich der Dosierkammer (52) abzudichten.

2. Vorrichtung nach Anspruch 1,
**dadurch gekennzeichnet,**
**dass** die Dichteinrichtung (64) in Form eines eine erste Antriebsachse (41) der Dosiereinrichtung (20) radial umgebenden Wellendichtrings (65) ausgebildet ist.

3. Vorrichtung nach Anspruch 2,
**dadurch gekennzeichnet,**
**dass** die Dichteinrichtung (64) radial zwischen der ersten Antriebsachse (41) und einer Ausnehmung (66) des Vorratsbehälters (13) aufgenommen ist.

4. Vorrichtung nach einem der Ansprüche 1 bis 3,
**dadurch gekennzeichnet,**
**dass** die Lagereinrichtung (60) zusammen mit der Dichteinrichtung (64) und der Dosiereinrichtung (20) als eine mit dem Vorratsbehälter (13) verbindbare, vormontierbare Baueinheit (70) ausbildet.

5. Vorrichtung nach einem der Ansprüche 1 bis 4,
**dadurch gekennzeichnet,**
**dass** die Lagereinrichtung (60) und die Dichteinrichtung (64) aus sterilisierbaren Materialien bestehen.

6. Vorrichtung nach Anspruch 4 oder 5,
**dadurch gekennzeichnet,**
**dass** der Baueinheit (70) ein Ausblaselement (22) zugeordnet ist, in dem die wenigstens eine Bohrung (31, 32, 33) angeordnet ist oder mündet, und dass das Ausblaselement (22) in eine an einem Bodenbereich (26) des Vorratsbehälters (13) ausgebildete Öffnung (24) formschlüssig einsetzbar ist.

7. Vorrichtung nach einem der Ansprüche 4 bis 6,
**dadurch gekennzeichnet,**
**dass** mehrere Baueinheiten (70) mit einem gemeinsamen Vorratsbehälter (13) verbunden sind.

8. Vorrichtung nach einem der Ansprüche 4 bis 7,
**dadurch gekennzeichnet,**
**dass** die wenigstens eine Baueinheit (70) auf der dem Vorratsbehälter (13) abgewandten Seite in Wirkverbindung mit einer Durchgangsöffnungen (57) zum Befüllen der Behälter (1) mit dem Füllgut aufweisenden Abschlussplatte (54) angeordnet ist.

9. Vorrichtung nach einem der Ansprüche 1 bis 8,
**dadurch gekennzeichnet,**
**dass** die Dosiereinrichtung (20) um die Drehachse (40) um einen Drehwinkel von max. +/- 60° um eine Mittelstellung oszillierend beweglich ist.

## Claims

1. Apparatus (10) for metering and filling powdery filling material into containers (1), comprising a storage container (13) for the filling material, comprising a metering device (20) which can be rotated stepwise about an axis of rotation (40) and which has at least one metering chamber (52) for receiving a target quantity of filling material, the metering device (20) being movable at least between a first position for transferring filling material from the storage container (13) into the metering chamber (52) and a second position for dispensing the filling material from the metering chamber (52) into the container (1), and comprising at least one bore (31, 32, 33) for conducting compressed air into the region of the metering chamber (52) in the second position,
**characterized in that**
the metering device (20) is rotatably mounted by means of a bearing device (60) arranged within the storage container (13), and **in that** a sealing device (64) is arranged between the bearing device (60) and the at least one metering chamber (52), which sealing device is designed to seal off the entry of media or particles from the region of the bearing device (60) into the region of the metering chamber (52).

2. Apparatus according to claim 1,
**characterized in that**
the sealing device (64) is designed in the form of a shaft sealing ring (65) radially surrounding a first drive shaft (41) of the metering device (20).

3. Apparatus according to claim 2,
**characterized in that**
the sealing device (64) is received radially between the first drive shaft (41) and a recess (66) of the storage container (13).

4. Apparatus according to any of claims 1 to 3,
**characterized in that**
the bearing device (60), together with the sealing device (64) and the metering device (20), forms a pre-mountable structural unit (70) that can be connected to the storage container (13).

5. Apparatus according to any of claims 1 to 4,
**characterized in that** the bearing device (60) and the sealing device (64) consist of sterilizable materials.

6. Apparatus according to claim 4 or claim 5,
**characterized in that**
a blow-out element (22) is assigned to the structural unit (70), in which blow-out element the at least one bore (31, 32, 33) is arranged or ends, and **in that** the blow-out element (22) can be inserted in a form-fitting manner into an opening (24) formed in a base region (26) of the storage container (13).

7. Apparatus according to any of claims 4 to 6,
**characterized in that**
a plurality of structural units (70) are connected to a common storage container (13).

8. Apparatus according to any of claims 4 to 7,
**characterized in that**
the at least one structural unit (70), on the side facing away from the storage container (13), is operatively connected to a passage opening (57) for filling the containers (1) with the end plate (54) having the filling material.

9. Apparatus according to any of claims 1 to 8,
**characterized in that**
the metering device (20) is movable in an oscillating manner about the axis of rotation (40) by an angle of rotation of at most +/- 60° about a central position.

## Revendications

1. Dispositif (10) pour le dosage et le versement d'un produit à verser pulvérulent dans des récipients (1), avec un récipient de stockage (13) pour le produit à verser, avec un système de dosage (20) pouvant tourner pas à pas autour d'un axe de rotation (40), qui présente au moins une chambre de dosage (52) pour la réception d'une quantité de consigne de produit à verser, dans lequel le système de dosage (20) est mobile au moins entre une première position pour le transfert du produit à verser à partir du récipient de stockage (13) dans la chambre de dosage (52) et une deuxième position pour la distribution du produit à verser à partir de la chambre de dosage (52) dans le récipient (1), et avec au moins un trou (31, 32, 33) pour le guidage d'air comprimé dans la zone de la chambre de dosage (52) dans la deuxième position,
**caractérisé en ce**
**que** le système de dosage (20) est monté rotatif au moyen d'un système de palier (60) disposé à l'intérieur du récipient de stockage (13), et qu'un système d'étanchéité (64), qui est réalisé pour étanchéifier l'accès de milieux ou particules à partir de la zone du système de palier (60) dans la zone de la chambre de dosage (52), est disposé entre le système de palier (60) et la au moins une chambre de dosage (52).

2. Dispositif selon la revendication 1,
**caractérisé en ce**
**que** le système d'étanchéité (64) est réalisé sous forme d'une bague d'étanchéité d'arbre (65) entourant radialement un premier axe d'entraînement (41) du système de dosage (20).

3. Dispositif selon la revendication 2,
**caractérisé en ce**
**que** le système d'étanchéité (64) est reçu radialement entre le premier axe d'entraînement (41) et un évidement (66) du récipient de stockage (13).

4. Dispositif selon l'une quelconque des revendications 1 à 3,
**caractérisé en ce**
**que** le système de palier (60) conjointement avec le système d'étanchéité (64) et le système de dosage (20) réalise sous la forme d'une unité modulaire (70) pouvant être pré-assemblée, pouvant être reliée au récipient de stockage (13).

5. Dispositif selon l'une quelconque des revendications 1 à 4,
**caractérisé en ce**
**que** le système de palier (60) et le système d'étanchéité (64) sont constitués de matériaux stérilisables.

6. Dispositif selon la revendication 4 ou 5,
**caractérisé en ce**
**qu'**un élément de soufflage (22), dans lequel le au moins un trou (31, 32, 33) est disposé ou débouche, est associé à l'unité modulaire (70), et que l'élément de soufflage (22) peut être inséré par coopération de formes dans une ouverture (24) réalisée sur une zone de fond (26) du récipient de stockage (13).

7. Dispositif selon l'une quelconque des revendications 4 à 6,
**caractérisé en ce**
**que** plusieurs unités modulaires (70) sont reliées à un récipient de stockage (13) commun.

8. Dispositif selon l'une quelconque des revendications 4 à 7,
**caractérisé en ce**
**que** la au moins une unité modulaire (70) est disposée sur la face opposée au récipient de stockage (13) en liaison fonctionnelle avec une plaque de fermeture (54) présentant des ouvertures de passage (57) pour le remplissage des récipients (1) avec le produit à verser.

9. Dispositif selon l'une quelconque des revendications 1 à 8,
**caractérisé en ce**
**que** le système de dosage (20) est mobile de manière à osciller autour de l'axe de rotation (40) d'un angle de rotation de maximum ± 60° autour d'une position centrale.
